# EUROPÄISCHE PATENTANMELDUNG

(11) **EP 3 331 106 A1**
(43) Veröffentlichungstag der Anmeldung: **06.06.2018**
(21) Anmeldenummer: 17201036.5
(22) Anmeldetag: 10.11.2017
(51) Int. Cl.: H01R 25/14, H04L 12/40, F21V 21/002, H01R 107/00, H01R 4/2404

(54) **BUSANORDNUNG**

(30) Priorität: 05.12.2016 DE 202016106758 U
(71) Anmelder: Knürr GmbH, 94424 Arnstorf (DE)
(72) Erfinder: MEES, Ronny, 94474 Vilshofen (DE)
(74) Vertreter: Wunderlich & Heim Patentanwälte Partnerschaftsgesellschaft mbB

(57) **Zusammenfassung**

Die Erfindung betrifft eine Busanordnung, bei welcher ein Busübertragungsmittel (10) an einem Bauteil oder einem Gehäuse (1) eines Racks angeordnet ist. Das Busübertragungsmittel (10) weist mindestens eine Busleitung (12), einen Busisolator (14), der die Busleitung zumindest abschnittsweise bedeckt, und einen Busträger (16), auf dem sich die Busleitung (12) befindet, auf. Es ist in einer Vertiefung (20) an dem Bauteil oder dem Gehäuse (1) angeordnet, wobei die Vertiefung (20) einen Einführbereich (22) zum Einführen einer Anschlusseinrichtung (40) und einen an den Einführbereich (22) angrenzenden Aufnahmebereich (26) zum Aufnehmen der eingeführten Anschlusseinrichtung (40) aufweist. Ferner ist eine lichte Breite des Einführbereichs (22) geringer als eine lichte Breite des Aufnahmebereichs (26), wobei der Aufnahmebereich (26) und das Busübertragungsmittel (10) ausgebildet sind, um mindestens eine Informationen übertragende Verbindung der Anschlusseinrichtung (40) mit der Busleitung (12) durch den Busisolator (12) zu ermöglichen.

## Beschreibung

Die Erfindung betrifft eine Busanordnung, insbesondere eine Datenbusanordnung, bei welcher ein Busübertragungsmittel an einem Bauteil oder einem Gehäuse eines Racks angeordnet ist.

Unter einem Rack kann auch ein Geräteschrank oder ein Elektronikschrank für Elektronikbaugruppen, insbesondere ein Server- oder Netzwerkschrank verstanden werden. Hierbei kann es sich um einen 19"-Schrank handeln. In einem Rack können Geräte oder Baueinheiten, beispielsweise Server, Telekommunikationsgeräte, Klimageräte oder Netzwerkkomponenten wie Switches, angeordnet sein.

Das Bauteil kann beispielsweise ein Rahmenelement eines derartigen Schranks oder ein 19"-Profilelement desselben sein. Das Bauteil kann auch ein allein das Busübertragungsmittel führendes Bauteil sein und hierfür an den Rahmen oder das Gehäuse eines Schranks angebracht sein. Insbesondere kann das Bauteil aus Aluminium hergestellt sein.

Das derart angeordnete Busübertragungsmittel weist mindestens eine Busleitung, einen Busisolator, der die Busleitung zumindest abschnittsweise bedeckt und einen Busträger, auf dem sich die Busleitung befindet, auf. Die Busleitung kann mindestens eine Busleiterbahn und/oder mindestens einen Busleiter aufweisen. Der Busisolator kann mindestens eine Busisolationsschicht aufweisen.

Busleitungen des Busübertragungsmittels können beispielsweise zum Übertragen von Daten, Energie und/oder Steuerinformationen ausgebildet sein.

Die Erfindung betrifft weiterhin eine Anschlusseinrichtung, die zum Anschließen an ein Busübertragungsmittel geeignet und ausgebildet ist. Die Anschlusseinrichtung weist mindestens einen Kontakt zum Kontaktieren mit einer Busleitung eines Busübertragungsmittels und ein Fixiermittel zum Fixieren der Anschlusseinrichtung an einer Busanordnung auf.

Anschlusseinrichtungen können auch als Anschlussmodule oder als Kontaktstellen eines (Bus-)Teilnehmers bezeichnet werden.

Zudem betrifft die Erfindung ein Bussystem mit einer Busanordnung und mindestens einer an dieser anschließbaren Anschlusseinrichtung. Das Bussystem kann außerdem eine Bussteuerungseinrichtung oder einen Buscontroller aufweisen.

Ein an einem Serverschrank angeordnetes Schienensystem mit Leitungen zur Energiebereitstellung ist aus der WO 2008/046577 A1 bekannt. Zum Anordnen von Energieverteilungsmodulen an dem Schienensystem greifen Verriegelungseinrichtungen in eine Energie leitende Basisstruktur des Schienensystems ein. Die Verriegelungseinrichtungen gewährleisten, dass ein angeschlossenes Energieverteilungsmodul einen sicheren Halt an dem Schienensystem selbst hat.

Ein Nachteil eines derartigen Anschlusses besteht darin, dass die auch zum Verriegeln vorgesehene leitungsführende Basisstruktur für das Verriegeln eines Anschlussmoduls frei zugänglich an einem Serverschrank angeordnet werden muss. Hierdurch wird Platz beansprucht.

Ein weiterer Nachteil eines derartigen Anschlusses besteht darin, dass beim Anschließen eines Anschlussmoduls auf die leitende Basisstruktur selbst Kräfte einwirken. Das Anschließen von elektrischen Anschlusseinrichtungen kann daher die leitende Basisstruktur bei zu hoher Krafteinwirkung beschädigen.

Der Erfindung liegt daher als eine **Aufgabe** zugrunde, eine Busanordnung zu schaffen, an welcher ein effizienter und sicherer Anschluss von Anschlusseinrichtungen möglich ist.

Diese Aufgabe wird erfindungsgemäß durch eine Busanordnung mit den Merkmalen des Anspruchs 1, durch eine Anschlusseinrichtung mit den Merkmalen des Anspruchs 8 und durch ein Bussystem mit den Merkmalen des Anspruchs 12 gelöst.

Weitere vorteilhafte Ausführungsformen sind in den jeweiligen abhängigen Ansprüchen, in der Beschreibung und in den Figuren sowie in deren Beschreibung angegeben und gezeigt.

Die erfindungsgemäße Busanordnung sieht vor, dass das Busübertragungsmittel in einer Vertiefung an dem Bauteil oder dem Gehäuse des Racks angeordnet ist. Dabei weist die Vertiefung einen Einführbereich zum Einführen einer Anschlusseinrichtung und einen Aufnahmebereich zum Aufnehmen der eingeführten Anschlusseinrichtung auf, wobei die Anschlusseinrichtung dazu ausgebildet ist, an das Busübertragungsmittel angeschlossen zu werden. In der Vertiefung grenzt der Aufnahmebereich an den Einführbereich an und eine lichte Breite des Einführbereichs ist geringer als eine lichte Breite des Aufnahmebereichs. Somit ist ein Anschlag in der Vertiefung ausgebildet, welcher einem Rückführen der Anschlusseinrichtung entgegenwirkt. Der Aufnahmebereich und das Busübertragungsmittel sind zudem ausgebildet, mindestens eine Informationen übertragende Verbindung der Anschlusseinrichtung mit der Busleitung durch den Busisolator zu ermöglichen.

Unter lichter Breite kann auch das lichte Maß verstanden werden. Als lichte Breite kann daher die Distanz zwischen gegenüberliegenden Vertiefungswänden in deren entsprechenden Tiefe in der Vertiefung verstanden werden. Bei der Vertiefung kann es sich beispielsweise um eine Nut handeln.

Als Anschlag in der Vertiefung, kann ein Überstand, ein Vorsprung oder eine Auskragung vorgesehen sein, welche alleine oder gemeinsam geeignet sind, einem Rückführen oder Wiederentfernen der Anschlusseinrichtung aus der Vertiefung entgegenzuwirken, wobei dieses Entgegenwirken auch als ein Blockieren, Sperren, Klemmen der Anschlusseinrichtung oder bloßes Zusammenwirken mit dieser verstanden werden kann.

Die Informationen übertragende Verbindung kann Daten oder Steuerinformationen übertragen. Alternativ oder zusätzlich kann auch eine Energie übertragende Verbindung vorgesehen sein. Über ein Busübertragungsmittel können Informationen mehrerer Anschlusseinrichtungen übertragen werden.

Ein Grundgedanke der Erfindung besteht darin, dass ein Busübertragungsmittel in einer Vertiefung angeordnet ist, welche eine Geometrie oder ein Profil aufweist, das dazu geeignet ist, eine Anschlusseinrichtung aufzunehmen und dieser dabei einen sicheren Halt zu gewähren. Dabei kann ein Busübertragungsmittel in ein Bauteil oder ein Gehäuse eines Racks integriert werden. Hierfür wir die Geometrie oder das Profil der Vertiefung so gewählt, dass die Anschlusseinrichtung in einem Aufnahmebereich vollständig aufgenommen werden kann, wobei ein schmalerer Einführbereich der Anschlusseinrichtung so entgegenwirkt, dass sie an zumindest einem Teil des Einführbereichs als Anschlag anstößt und so ein Rückführen ohne Weiteres verhindert wird.

Ein Vorteil der erfindungsgemäßen Busanordnung besteht somit darin, dass der Aufwand für eine Verkabelung mit zu verlegenden Kabeln und Kabelbäumen verringert werden kann. So kann es auch vermieden werden, dass verlegte Kabel den Einbau von Baugruppen im Rack stören. Zudem kann der Arbeitsaufwand bei der Installation und Bestückung eines Racks verringert werden und Arbeitskosten können reduziert werden.

Die erfindungsgemäße Busanordnung hat gegenüber bekannten Busanordnungen den weiteren Vorteil, dass ein Rückführen oder sich Lösen einer Anschlusseinrichtung durch die Bauteilgeometrie eines Bauteils selbst verhindert wird, ohne dass zusätzliche Befestigungsmittel oder Werkzeug zu deren festen Anschluss erforderlich sind. Dies kann beispielsweise durch händische Dreh- oder Schubbewegungen der Anschlusseinrichtungen in die oder innerhalb der Vertiefung erfolgen.

Eine bevorzugte Ausgestaltung der erfindungsgemäßen Busanordnung besteht darin, dass die Vertiefung eine Nut, insbesondere eine T-Nut, ist. Grundsätzlich kann jede Nut vorgesehen sein, welche einen Einführbereich und einen Aufnahmebereich aufweist. Hierbei kann es vorteilhaft sein, dass der Aufnahmebereich ein sich quer zur Vertiefungsrichtung erstreckender Bereich der Nut ist, der tiefer im Bauteil oder im Gehäuse des Racks angeordnet ist als der Einführbereich. Der tiefere Aufnahmebereich kann dabei insbesondere breiter sein als der weniger tiefe Einführbereich.

Dementsprechend kann neben einer T-Nut alternativ beispielsweise eine L-Nut vorgesehen sein, welche einem einseitigen Teilbereich des Profils einer T-Nut entspricht.

Die Vertiefung kann sich in Vertiefungsrichtung auch als eine Schwalbenschwanznut aufweiten. Unter einem in der Vertiefung tiefer angeordneten Bereich kann ein Bereich verstanden werden, der sich weiter entfernt von der Bauteil- oder der Gehäuseoberfläche des Racks befindet als der andere, weniger tieferliegende Bereich. Insbesondere kann so der Aufnahmebereich weiter von der Oberfläche des Bauteils oder des Gehäuses entfernt sein als der Einführbereich. Eine derartige Vertiefungsgeometrie kann auch so beschrieben werden, dass sich der Aufnahmebereich ausgehend von dem Einführbereich in dem Bauteil oder dem Gehäuse abgewinkelt verzweigt oder aufweitet.

Grundsätzlich kann das Busübertragungsmittel beliebig an beziehungsweise in dem Bauteil oder dem Gehäuse angeordnet sein. Es ist vorteilhaft, wenn sich das Busübertragungsmittel entlang einer Längsausdehnung des Bauteils oder des Gehäuses erstreckt. Das Busübertragungsmittel kann sich dabei vollständig oder abschnittsweise entlang der Längsausdehnung erstrecken. Die Längsausdehnung kann sich in einer Höhe, einer Breite oder einer Tiefe des Racks erstrecken. Alternativ oder zusätzlich kann sich das Busübertragungsmittel somit insbesondere vertikal und/oder horizontal erstrecken. Auch ein abgewinkelter Verlauf des Busübertragungsmittels ist möglich.

Für eine gute Zugänglichkeit des Busübertragungsmittels und zur Reduzierung des Verkabelungsaufwands kann es besonders vorteilhaft sein, wenn sich das Busübertragungsmittel im Wesentlichen über die Höhe des Racks erstreckt. Das Busübertragungsmittel kann sich hierzu entlang eines vertikalen Bauteils eines Rahmens des Racks oder entlang einer vertikalen Sterbe des Gehäuses erstrecken.

Eine weitere bevorzugte Ausführungsform der erfindungsgemäßen Busanordnung besteht darin, dass eine Positionserkennungseinrichtung vorgesehen ist, die ausgebildet ist, eine Relativposition der Anschlusseinrichtung auf dem Busübertragungsmittel zu erkennen. Dem Bus kann somit eine Intelligenz verliehen werden, welche es ermöglicht, dass Positionen angeschlossener Anschlusseinrichtungen entlang dem Busübertragungsmittel ermittelt werden können. Die Positionserkennungseinrichtung kann auch als Lageerkennungseinrichtung zum Erkennen der Lage von Anschlusseinrichtungen im Busübertragungsmittel bezeichnet werden. Das Erkennen der Position oder der Lage kann beispielsweise durch eine Widerstandsmessung am Busübertragungsmittel erfolgen.

Es kann neben der Datenübertragung mehrerer Busteilnehmer über das gemeinsame Busübertragungsmittel auch vorgesehen sein, Informationen über deren angeschlossenen Position verwalten. Hierfür kann ein Businformationssystem eingerichtet sein, welches Positionen, den Typ und/oder einen Zustand von Anschlusseinrichtungen verwalten kann. Diese Informationen können beispielsweise abgefragt oder automatisch verwertet werden.

Eine weitere vorteilhafte Ausgestaltung der erfindungsgemäßen Busanordnung kann dadurch gegeben sein, dass die Vertiefung eine in ihrem Boden verlaufende Nut aufweist und zumindest der Busträger in die im Boden verlaufende Nut eingelegt ist. Diese Nut kann zusätzlich in der profilierten Nut vorgesehen sein, welche die Vertiefung selbst bilden kann. Um den lichten Raum der Vertiefung möglichst wenig auszufüllen, kann der Busträger, beispielsweise eine Busplatine, aus einem möglichst dünnen Trägermaterial bestehen. Der Busträger kann zudem in eine Nut oder Aussparung im Vertiefungsboden eingelegt werden. Somit kann lediglich die mindestens eine Busleitung in die Vertiefung hineinragen oder mit dem Boden der Vertiefung bündig sein. Daneben können auch die mindestens eine Busleitung oder auch deren bedeckender Busisolator in die Nut eingelegt sein. Ein derart eingelegtes Busübertragungsmittel hat den Vorteil, dass Kurzschlüsse beim Einbau weiterer Konstruktionselemente vermieden werden können. Beispielsweise können so Kurzschlüsse beim Einbau einer Federmutter verhindert werden. Daher kann es vorteilhaft sein, dass die Nut, insbesondere die T-Nut, um das Maß einer Busplatine zusätzlich vertieft wird.

Für die geometrische Ausgestaltung der Vertiefung der erfindungsgemäßen Busanordnung besteht eine bevorzugte Ausführungsform darin, dass der Einführbereich und der Aufnahmebereich der Erfindung dazu ausgebildet sind, die Anschlusseinrichtung werkzeuglos einzuführen, aufzunehmen und mit dem Busübertragungsmittel zu kontaktieren. Das werkzeuglose Einführen, Aufnehmen und Kontaktieren der Anschlusseinrichtung hat den Vorteil, dass das in der Vertiefung geschützte Busübertragungsmittel mit einem Werkzeug nicht beschädigt wird.

Die erfindungsgemäße Busanordnung eines Bus und ihre bevorzugten Ausgestaltungen haben somit den wesentlichen Vorteil, dass eine geeignete Anschlusseinrichtung eines Busteilnehmers einfach und sicher und zugleich für das Busübertragungsmittel materialschonend an das Busübertragungsmittel angeschlossen werden kann.

Des Weiteren betrifft die Erfindung eine Anschlusseinrichtung mit einem Fixiermittel zum Fixieren an einer Busanordnung. Bei der erfindungsgemäßen Anschlusseinrichtung ist das Fixiermittel dazu ausgebildet, mit einem Anschlag in einer Vertiefung der Busanordnung zusammenzuwirken. Das Fixiermittel hat eine Breite, welche größer ist als eine lichte Breite eines Einführbereichs der Vertiefung der Busanordnung und welche geringer ist als eine lichte Breite eines Aufnahmebereichs der Vertiefung der Busanordnung.

Als Fixiermittel kann im Rahmen der Erfindung ein Befestigungsmittel verstanden werden, welches die Anschlusseinrichtung selbst aufweist und dazu ausgebildet ist, unabhängig von dem Busübertragungsmittel an der Vertiefung befestigt zu werden. Es ist auch möglich unter dem Fixiermittel ein Eingriffsmittel zu verstehen, welches die Anschlusseinrichtung selbst aufweist und dazu ausgebildet ist, beabstandet zum Busübertragungsmittel in die Vertiefung einzugreifen.

Hinsichtlich der erfindungsgemäßen Anschlusseinrichtung kann es vorteilhaft sein, wenn das Fixiermittel dazu ausgebildet ist, mit dem Anschlag der Busanordnung durch Drehen des Fixiermittels zusammenzuwirken. Dies kann beispielsweise durch das Vorsehen einer Exzentermechanik realisiert werden. Daneben kann das Kontaktieren mit der Busleitung durch eine Bewegung des Kontakts in Richtung der Drehachse der Drehbewegung herstellbar sein. Der Kontakt kann hierfür ein ausfahrbarer Messerkontakt sein.

Das Fixiermittel kann einen Steg aufweisen, der durch den Einführbereich in die Vertiefung eingeführt und im Aufnahmebereich aufgenommen werden kann. Der im Aufnahmebereich der Vertiefung aufgenommene Steg kann im Aufnahmebereich gedreht werden und so zumindest teilweise an dem am Einführbereich ausgebildeten Anschlag anliegen. Durch das teilweise Anliegen des Stegs kann sich die Anschlusseinrichtung nicht mehr aus der Vertiefung lösen. Erst nach nochmaligem Zurückdrehen des Stegs kann die Anschlusseinrichtung wieder rückgeführt werden und damit aus der Vertiefung wieder entfernt werden.

Ein derartiger Steg kann länglich, beispielsweise oval ausgebildet sein, so dass er eine Länge in einer Längsausdehnung aufweist, die länger ist als die lichte Breite des Einfüllbereichs und kürzer ist als die lichte Breite des Aufnahmebereichs. Der Steg kann daneben eine Breite in einer Breitenausdehnung aufweisen, welche kürzer ist als eine lichte Breite des Einführbereichs. So kann der Steg einerseits durch den Einführbereich hindurch eingeführt werden und andererseits nach Drehen im Aufnahmebereich am Anschlag anliegen.

Für ein sicheres Fixieren der erfindungsgemäßen Anschlusseinrichtung kann das Fixiermittel ein Exzenter sein. Der Exzenter kann ähnlich zum Steg in die Vertiefung durch den Einführbereich eingeführt werden und sich dann im Aufnahmebereich befinden. Nach Drehen der Anschlusseinrichtung beziehungsweise des Exzenters, beispielsweise um 90 Grad, kann der Exzenter am Anschlag der Vertiefung anliegen. Der Exzenter kann eine abgeschrägte Oberfläche aufweisen, welche dem Anschlag zugewandt sein kann. Beim Verdrehen kann die Anschlusseinrichtung mit dem abgeschrägten Exzenter gleichmäßig in die Vertiefung bewegt werden. Die abgeschrägte Exzenteroberfläche gleitet dabei auf dem Anschlag ab. Eine derartige Exzentermechanik kann durch das Anliegen und Abgleiten des Exzenters am Anschlag die Anschlusseinrichtung so nach unten drücken und der Kontakt kann mit der Busleitung kontaktieren.

Alternativ zu einer Exzentermechanik kann auch ein Drehverschluss vorgesehen sein, welcher bei einer horizontalen Drehung der Anschlusseinrichtung gleichzeitig eine vertikale Bewegung eines Kontakts ausführt um eine Kontaktierung mit einer Busleitung herzustellen. Hierbei kann es sich beispielsweise um einen Bajonettverschluss handeln.

Eine bevorzugte Ausgestaltungsform der erfindungsgemäßen Anschlusseinrichtung besteht ferner darin, dass Messerkontakte zum Durchtrennen des Busisolators vorgesehen sind. Kontakte der Anschlusseinrichtung können grundsätzlich unabhängig oder abhängig von einer Drehbewegung der Anschlusseinrichtung in der Vertiefung durch eine vertikale Bewegung in Vertiefungsrichtung mit den Busleitungen kontaktieren. Zum Kontaktieren der Busleitungen können Messerkontakte ausgefahren werden, den Busisolator durchtrennen und einen Kontakt mit der Busleitung herstellen. Die Kontakte, insbesondere die Messerkontakte, können alternativ auch durch eine Kipp- oder Schwenkbewegung der Anschlusseinrichtung mit den Busleitungen kontaktieren. In bevorzugter Weise ist ein Messerkontakt ein Messer-Feder-Kontakt.

Die Erfindung bezieht sich außerdem auf ein Bussystem, bei dem es vorgesehen ist, dass mindestens eine erfindungsgemäße Anschlusseinrichtung an das Busübertragungsmittel der erfindungsgemäßen Busanordnung angeschlossen ist.

Die Erfindung wird nachfolgend anhand von Ausführungsbeispielen und schematischen Zeichnungen näher erläutert. In diesen Zeichnungen zeigen:
- Fig. 1a: ein Schnittprofil einer Vertiefung einer erfindungsgemäßen Busanordnung in einem Bauteil;
- Fig. 1b: eine Draufsicht auf die Vertiefung von Fig. 1a;
- Fig. 2: das Schnittprofil von Fig. 1a mit einem in der Vertiefung angeordneten Busübertragungsmittel als eine Ausführungsform der erfindungsgemäßen Busanordnung;
- Fig. 3: das Schnittprofil von Fig. 1a mit einem in der Vertiefung angeordneten und darin eingelegten Busübertragungsmittel als eine weitere Ausführungsform der erfindungsgemäßen Busanordnung;
- Fig. 4: die erfindungsgemäße Busanordnung von Fig. 2 mit einer im Aufnahmebereich aufgenommenen Anschlussreinrichtung eines Busteilnehmers;
- Fig. 5: in isolierter Weise und in seitlicher Ansicht die Anschlusseinrichtung des Busteilnehmers von Fig. 4 und
- Fig. 6: die erfindungsgemäße Busanordnung mit einer weiteren aufgenommenen Anschlusseinrichtung eines weiteren Busteilnehmers.

Die Figuren und 1 b zeigen eine Vertiefung 20 einer erfindungsgemäßen Busanordnung ohne ein darin angeordnete Busübertragungsmittel 10. In dieser Ausführungsform befindet sich die Vertiefung 20 in einem Bauteil 1 eines Racks.

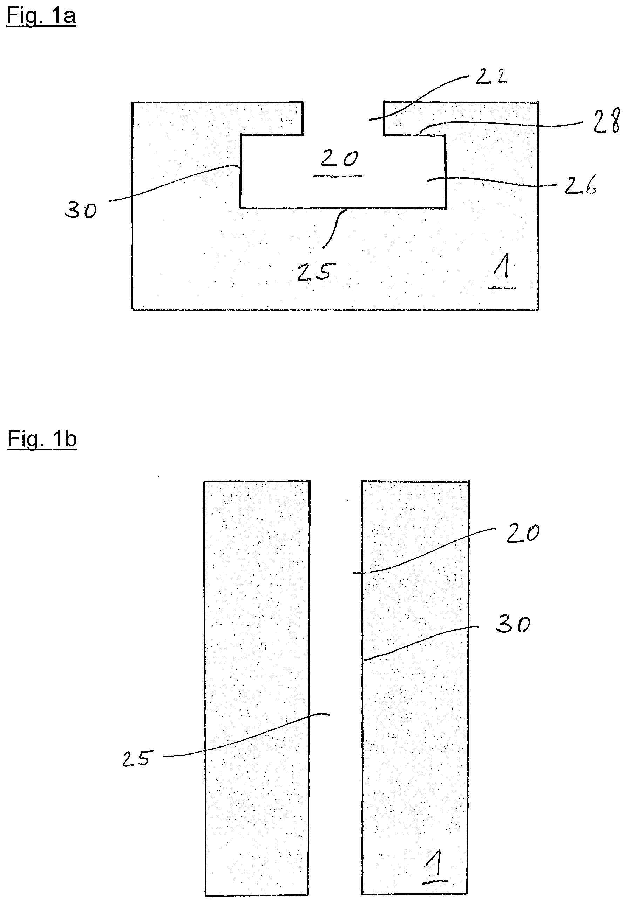

Fig. zeigt ein Profil der Vertiefung 20 in einem Querschnitt und Fig. 1b zeigt die Vertiefung 20 in einer Draufsicht auf eine Oberfläche des Bauteils 1. In dieser Ausführungsform ist die Vertiefung 20 im Profil als eine T-Nut 30 ausgebildet. Die T-Nut 30 weist einen Einführbereich 22 und einen Aufnahmebereich 26 auf. Der Aufnahmebereich 26 ist breiter als der Einführbereich 22 und befindet sich tiefer im Inneren des Bauteils 1 als der Einführbereich 22.

Eine im Bauteil 1 innenliegende und zweigeteilte Fläche, welche sich zwischen dem Einführbereich 22 und dem Aufnahmebereich 26 befindet, ist als ein zweiseitiger Anschlag 28 ausgebildet. Gegenüberliegend zum Anschlag 28 ist eine weitere innenliegende Fläche, welche sich tiefer im Bauteil 1 als der Anschlag 28 befindet, als ein Boden 25 der Vertiefung 20 vorgesehen. In der Draufsicht der Fig. 1b ist lediglich der Boden 25, jedoch nicht der Anschlag 28 zu sehen.

Mit dem Busübertragungsmittel 10 eines Bus kann ein Busübertragungsweg dessen entlang des Bauteils 1 verwirklicht sein. Entlang des Busübertragungswegs können mehrere Busteilnehmer am Busübertragungsmittel 10 angeschlossen sein.

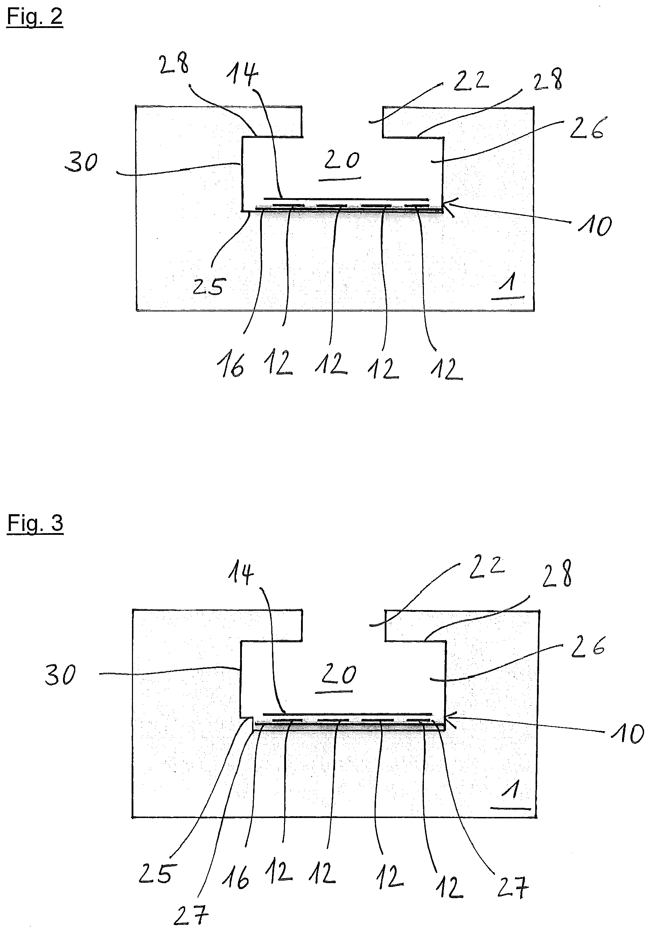

Figuren 2 und 3 zeigen die Vertiefung 20 mit dem im Aufnahmebereich 26 der Vertiefung 20 angeordneten Busübertragungsmittel 10. Der wesentliche Unterschied zwischen den Figuren 2 und 3 besteht darin, dass das Busübertragungsmittel 10 in Fig. 2 auf dem Boden 25 der Vertiefung 20 angeordnet ist und das Busübertragungsmittel 10 in Fig. 3 in den Boden 25 in eine darin befindliche Nut 27 in das Bauteil 1 eingelegt ist. Das Busübertragungsmittel 10 der Fig. 3 befindet sich somit tiefer in der Vertiefung 20 als das Busübertragungsmittel 10 der Fig. 2 und nimmt somit weniger Raum in der Vertiefung 20 ein.

Das Busübertragungsmittel 10 besteht aus einem Busträger 16, insbesondere einer Busplatine, auf der mehrere Busleitungen 12 parallel angeordnet sein können. In diesem Ausführungsbeispiel befinden sich vier Busleitungen 12 auf dem Busträger 16. Über den Busleitungen 12, welche sich wie in Fig. 2 gezeigt oberhalb des Bodens 25 der Vertiefung 20 befinden oder wie in Fig. 3 gezeigt im Wesentlichen bündig zum Boden 25 sind, ist ein Busisolator 14 vorgesehen. Der Busisolator 14 bedeckt sämtliche Busleitungen 12 wie in den Figuren 2 und 3 gezeigt. Der in den Figuren schematisch gezeigte Busisolator 14 kann direkt auf den Busleitungen 12 aufliegen. Durch das Vorsehen des Busisolators 14 auf den Busleitungen 12 sind diese isoliert. Mit isolierten Busleitungen 12 kann es verhindert werden, dass es bei einem ungewollten Kontaktieren von Busleitungen 12 zu einem Kurzschluss kommt. Der Busisolator 14 kann auch teilweise mit dem Busträger 16 verbunden sein. Darüber hinaus kann das Busübertragungsmittel 10 auch so weit in den Boden 25 der Vertiefung 20 eingelegt sein, dass der Busisolator 14 mit dem Boden 25 bündig ist oder sich sogar unterhalb des Bodens 25 befindet.

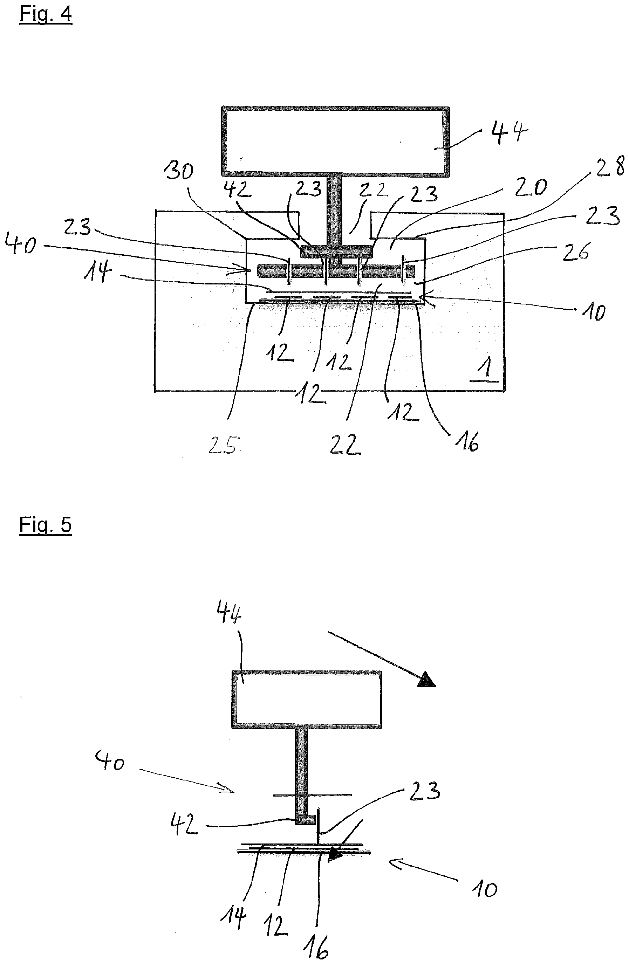

In Fig. 4 ist die erfindungsgemäße Busanordnung mit der Vertiefung 20 und dem Busübertragungsmittel 10 von Fig. 2 mit einer Anschlusseinrichtung 40 eines Sensors 44 als Busteilnehmer gezeigt. Die Anschlusseinrichtung 40 des Sensors 44 befindet sich im Aufnahmebereich 26 der Vertiefung 20. Die Anschlusseinrichtung 40 weist einen Exzenter 42 als Fixiermittel auf. Durch Drehen der Anschlusseinrichtung 40 liegt der Exzenter 42 durch seine Exzentrizität (nicht gezeigt) teilweise am Anschlag 28 an. Der Exzenter 42 kann dabei einseitig oder beidseitig an einem rechten und/oder linken Anschlagsbereich der T-Nut 30 anliegen. Das Anliegen kann ein Verklemmen oder Fixieren der Anschlusseinrichtung 40 in der Vertiefung 20 bewirken. An der Anschlusseinrichtung 40 ist entsprechend der Anzahl der Busleitungen 12 die gleiche Anzahl an Kontakten vorgesehen. In diesem Ausführungsbeispiel sind vier Messerkontakte 23 vorgesehen, welche den Busisolator 14 durchtrennen und die Busleitungen 12 durch diesen jeweils kontaktieren.

Fig. 5 zeigt die Anschlusseinrichtung 40 zusammen mit dem verbundenen Sensor 44 von Fig. 4 für sich in einer Seitenansicht mit einer Busleitung 12 des Busübertragungsmittels 10. In Fig. 5 ist schematisch gezeigt, dass ein Drehen und/oder Verkippen des Sensors 44 (oberer Pfeil) ein Drehen und/oder Verkippen der Anschlusseinrichtung 40 (unterer Pfeil) bewirkt, welche so das Busübertragungsmittel 10 kontaktieren kann. Durch das mit den Pfeilen dargestellte Drehen beziehungsweise Verkippen durchtrennen die Messerkontakte 23 den Busisolator 14 und kontaktieren so mit den Busleitungen 12.

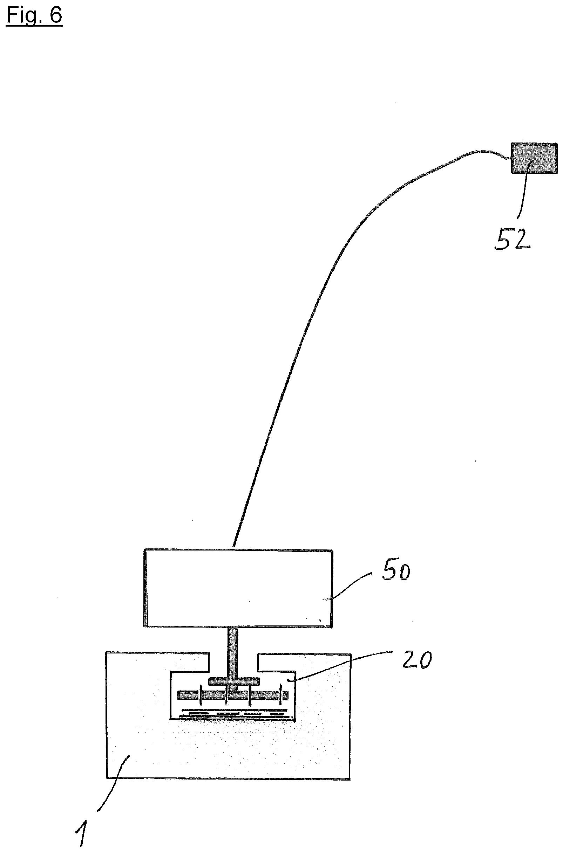

In Fig. 6 ist alternativ zum Sensor 44 als Busteilnehmer der Figuren 4 und 5 ein Verbindungsmodul 50 als Busteilnehmer dargestellt. Das Verbindungsmodul 50 kann dieselbe Anschlusseinrichtung 40 wie der Sensor 44 aufweisen, welche in der Vertiefung 20 des Bauteils aufgenommen ist. Das Verbindungsmodul 50 kann beispielsweise ein Buscontroller sein. Es ist über eine Verbindung mit einem RJ-Stecker 52 an ein Peripheriegerät angeschlossen. Der RJ-Stecker 52 kann ein RJ45-Stecker zum Anschließen an eine RPC-Karte (nicht gezeigt) sein.

Mit der erfindungsgemäßen Busanordnung und der erfindungsgemäßen Anschlusseinrichtung, beispielsweise eines Sensors oder eines anderen Busteilnehmers, ist es somit ermöglicht, ein Busübertragungsmittel einfach, effizient und materialschonend zu kontaktieren. Dies kann mit der Erfindung insbesondere werkzeuglos erfolgen. Zudem können mit der Erfindung Installationszeiten verringert und so die Gesamtbetriebskosen verringert werden.

## Patentansprüche

1. Busanordnung, insbesondere Datenbusanordnung,
bei welcher ein Busübertragungsmittel (10) an einem Bauteil (1) oder einem Gehäuse eines Racks, insbesondere eines Geräte- oder Serverschranks, angeordnet ist,
wobei das Busübertragungsmittel (10)
- mindestens eine Busleitung (12),
- einen Busisolator (14), der die Busleitung (12) zumindest abschnittsweise bedeckt, und
- einen Busträger (16), auf dem sich die Busleitung (12) befindet,
aufweist,
**dadurch gekennzeichnet,**
**dass** das Busübertragungsmittel (10) in einer Vertiefung (20) an dem Bauteil (1) oder dem Gehäuse angeordnet ist,
**dass** die Vertiefung (20)
- einen Einführbereich (22) zum Einführen einer Anschlusseinrichtung (40), welche dazu ausgebildet ist, an das Busübertragungsmittel (10) angeschlossen zu werden, und
- einen an den Einführbereich (22) angrenzenden Aufnahmebereich (26) zum Aufnehmen der eingeführten Anschlusseinrichtung (40)
aufweist,
**dass** eine lichte Breite des Einführbereichs (22) geringer ist als eine lichte Breite des Aufnahmebereichs (26) und so ein Anschlag (28) ausgebildet ist und
**dass** der Anschlag (28) einem Rückführen der Anschlusseinrichtung (40) entgegenwirkt, wobei der Aufnahmebereich (26) und das Busübertragungsmittel (10) ausgebildet sind, um mindestens eine Informationen übertragende Verbindung der Anschlusseinrichtung (40) mit der Busleitung (12) durch den Busisolator (14) zu ermöglichen.

2. Busanordnung nach Anspruch 1,
**dadurch gekennzeichnet,**
**dass** die Vertiefung (20) eine Nut, insbesondere eine T-Nut (30), ist und dass der Aufnahmebereich (26) ein sich quer zur Vertiefungsrichtung erstreckender Bereich der Nut ist, der tiefer im Bauteil (1) oder im Gehäuse des Racks angeordnet ist als der Einführbereich (22).

3. Busanordnung nach Anspruch 1 oder 2,
**dadurch gekennzeichnet,**
**dass** sich das Busübertragungsmittel (10) entlang einer Längsausdehnung des Bauteils (1) oder des Gehäuses erstreckt.

4. Busanordnung nach einem der Ansprüche 1 bis 3,
**dadurch gekennzeichnet,**
**dass** sich das Busübertragungsmittel (10) im Wesentlichen über die Höhe des Racks erstreckt.

5. Busanordnung nach einem der Ansprüche 1 bis 4,
**dadurch gekennzeichnet,**
**dass** eine Positionserkennungseinrichtung vorgesehen ist, die ausgebildet ist, eine Relativposition der Anschlusseinrichtung (40) auf dem Busübertragungsmittel (10) zu erkennen.

6. Busanordnung nach einem der Ansprüche 1 bis 5,
**dadurch gekennzeichnet,**
**dass** die Vertiefung (20) eine in ihrem Boden (25) verlaufende Nut (27) aufweist und zumindest der Busträger (16) in die im Boden (25) verlaufende Nut (27) eingelegt ist.

7. Busanordnung nach einem der Ansprüche 1 bis 6,
**dadurch gekennzeichnet,**
**dass** der Einführbereich (22) und der Aufnahmebereich (26) dazu ausgebildet sind, die Anschlusseinrichtung (40) werkzeuglos einzuführen, aufzunehmen und mit dem Busübertragungsmittel (10) zu kontaktieren.

8. Anschlusseinrichtung zum Anschließen an einem Busübertragungsmittel, insbesondere an dem Busübertragungsmittel (10) der Busanordnung nach einem der Ansprüche 1 bis 7, welche
- mindestens einen Kontakt zum Kontaktieren mit der Busleitung (12) der Busanordnung und
- ein Fixiermittel zum Fixieren der Anschlusseinrichtung (40) an der Busanordnung aufweist,
**dadurch gekennzeichnet,**
**dass** das Fixiermittel dazu ausgebildet ist, mit dem Anschlag (28) in der Vertiefung (20) der Busanordnung zusammenzuwirken und
**dass** eine Breite des Fixiermittels größer ist als eine lichte Breite des Einführbereichs (22) der Vertiefung (20) der Busanordnung und geringer ist als eine lichte Breite des Aufnahmebereichs (26) der Vertiefung (20) der Busanordnung.

9. Anschlusseinrichtung nach Anspruch 8
**dadurch gekennzeichnet,**
**dass** das Fixiermittel dazu ausgebildet ist, mit dem Anschlag (28) der Busanordnung durch eine Drehbewegung des Fixiermittels zusammenzuwirken und
**dass** das Kontaktieren mit der Busleitung (12) durch eine Bewegung des Kontakts in Richtung der Drehachse der Drehbewegung herstellbar ist.

10. Anschlusseinrichtung nach Anspruch 8 oder 9,
**dadurch gekennzeichnet,**
**dass** das Fixiermittel ein Exzenter (42) ist.

11. Anschlusseinrichtung nach einem der Ansprüche 8 bis 10,
**dadurch gekennzeichnet,**
**dass** Messerkontakte (23) zum Durchtrennen des Busisolators (14) vorgesehen sind.

12. Bussystem mit
- einer Busanordnung nach einem der Ansprüche 1 bis 7 und
- mindestens einer an das Busübertragungsmittel der Busanordnung angeschlossenen Anschlusseinrichtung nach einem der Ansprüche 8 bis 11.
